Europäisches Patentamt

European Patent Office

Office européen des brevets

(11) Veröffentlichungsnummer: **0 154 277**
**A1**

## (12) EUROPÄISCHE PATENTANMELDUNG

(21) Anmeldenummer: 85102056.0

(22) Anmeldetag: 25.02.85

(51) Int. Cl.⁴: **B 23 Q 11/00**

(30) Priorität: 28.02.84 IT 2103284

(43) Veröffentlichungstag der Anmeldung:
11.09.85 Patentblatt 85/37

(84) Benannte Vertragsstaaten:
AT BE CH DE FR GB IT LI LU NL SE

(71) Anmelder: I.ME.T. S.p.A.
Via Tre Fontane
I-24034 Cisano Bergamasco(IT)

(72) Erfinder: Beltrami, Carlo Benvenuto
Via Valmorea 6
Milano(IT)

(72) Erfinder: Arnoldi, Maurizio
Via Cornello 2
Torre de' Busi (Bg)(IT)

(74) Vertreter: Mayer, Hans Benno
Via dell'Orso 7/A
I-20121 Milano(IT)

(54) Antriebsvorrichtung für eine mit einem sich drehenden Werkzeug ausgerüstete Maschine, besonders für eine Sägemaschine.

(57) Antiebsvorrichtung fuer eine mit einem sich drehenden Werkzeug (18) ausgeruestete Maschine, insbesondere fuer eine Saegemaschine, wobei zwischen dem Antriebsmotor (M) und der das Werkzeug (18) aufnehmenden Antriebswelle (16) ein elastisch verformbares Ausgleichsmittel vorgesehen ist, das proportional zu den auftretenden Belastungen, denen das Werkzeug 18 ausgesetzt ist, elastisch verformt wird.

FIG. 2

EP 0 154 277 A1

- 2 -

0154277

I.ME.T S.p.A.

24034 - Cisano Bergamasco

Italien

Antriebsvorrichtung fuer eine mit einem sich drehenden Werkzeug ausgeruesteten Maschine, besonders fuer eine Saegemaschine"

Die vorstehende Erfindung bezieht sich auf eine Antriebsvorrichtung fuer eine mit einem sich drehenden Werkzeug ausgeruesteten Maschine, besonders fuer eine Saegemaschine.

Bekannte Kreisaegemaschinen zum Schneiden von Vollmaterial oder Profilen aus Metall, bestehen im wesentlichen aus einem Saegekopf, der mit einem Antriebsmotor wirkverbunden ist. Im Inneren weist dieser Saegekopf ein von mehreren Zahnraedern gebildetes Getriebe auf, das die Drehbewegung vom Antriebsmotor auf das Werkzeug, z.B. ein Kreissaegeblatt, uebertragen. Ueberlichweise sind Saegen dieser Art als sogenannte Kappsaegen ausgebildet, bei welchen der Saegekopf zusammen mit dem Werkzeug um eine horizontal angeordnete Welle verschwenkbar ist, und waehrend dieser Bewegung, das z.B. in einem Schraubstock festgespannte Werkstuecke zersaegt.

Es ist ferner eine Saegemaschine anderer Bauart bekannt geworden, in der der Saegekopf an senkrecht angeordneter Fuehrungen verschiebbar ist. Auch bei dieser Maschine wird das Werkstueck in einem Schraubstock, der auf einer unter dem Saegekopf liegenden Plattform angeordnet ist, festgespannt.

Es hat sich gezeigt, dass bei Saegemaschinen der genannten Art waehrend des Betriebes eine stoerende Geraeuschbelaestigung auftritt, die besonders auf die Schwingungen des Kreissaegeblattes in bestimmten Schnittsituationen zurueckzufuehren ist. Dieses Saegegeraeusch ueberschreitet haeufig die zulaessigen Laermbelaestigungswerte.

Ferner wird bei den genannten Maschinen oft ein Ausbrechen einzelner Zaehne des Kreissaegeblattes festgestellt, oder es tritt sogar ein Bruch des gesamten Saegeblattes, besonders beim Schneiden komplexer Profile auf, da in diesem Fall die Saegezaehne, nach Durchdringen einer Leerzone, oft auf scharfe Kanten oder vorspringende Stege auftreffen. Diese scharfen Kanten oder vorspringenden Stege beanspruchen das Saegeblatt ueberaus stark, aufgrund der sehr hohen Zerspanungsleistung des Einzelzahnes, die in diesem Falle auftritt.

In den bekannten Saegemaschinen kann diese ueberaus starke Belastung, aufgrund der starren Wirkverbindung zwischen der Antriebswelle des Kreissaegeblattes und der Motorwelle, nicht ausgeglichen werden. Somit fuehrt die zeitweise uebermaessige Beanspruchung des Kreissaegeblattes, wie bereits erwaehnt, zu einem

- 4 -

Abbrèchen der einzelnen Zaehne oder auch zu einem Bruch des gesamten Werkzeuges.

Aufgabe der vorstehenden Erfindung ist es, die Nachteile des Standes der Technik zu vermeiden und eine neue Antriebseinrichtung fuer die eingangs genannten Maschinen vorzuschlagen, mit der es moeglich ist, die Geraeuschentwicklung aufgrund von Schwingungen des Saegeblattes erheblich zu mindern, und ferner den Bruch einzelner Zaehne oder des gesamten Werkzeuges in kritischen Schnittsituationen zu vermeiden.

Diese Aufgabe wird erfindungsgemaess dadurch geloest, dass zwischen dem Anriebsmotor und der das Werkzeug aufnehmenden Antriebswelle ein Ausgleichmittel vorgesehen ist, das poportional zu den auftretenden Belastungen, denen das Werkzeug ausgesetzt wird, elastisch verformbar ist.

Weitere Vorteile, die mit der vorstehenden Erfindung erreicht werden, koennen der nun folgenden Beschreibung, den beigefuegten Zeichnungen und den Unteranspruechen entnommen werden.

Der Erfindungsgegenstand wird nun anhand von zwei Ausfuehrungsbeispielen genauer beschrieben und in den Zeichnungen dargestellt. Es zeigen:

Fig. 1 den Kopf der Saegemaschine im Schnitt entlang der Linie I-I der Fig. 2;

Fig. 2 den Kopf der Saegemaschine im Schnitt entlang der Linie II-II der Fig. 1;

Fig. 3 eine weitere Ausfuehrungsform der Erfindung im Schnitt.

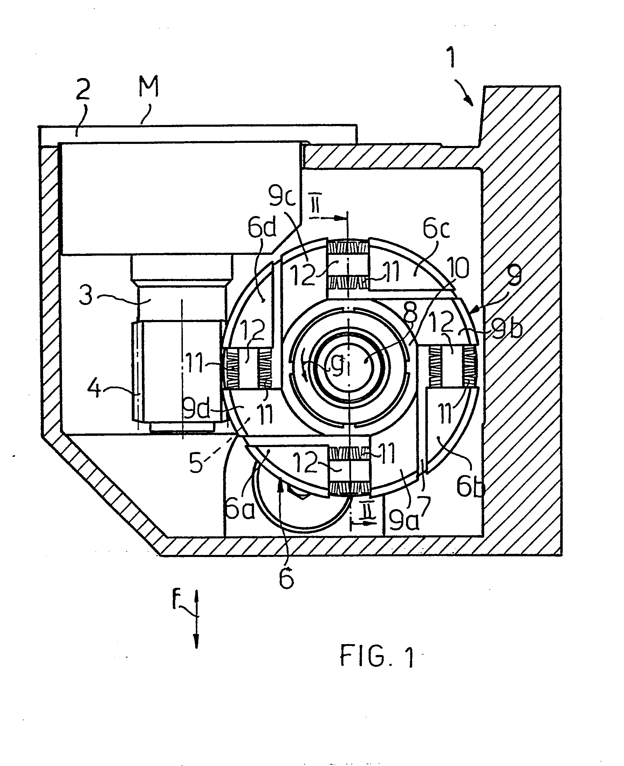

Wie der Fig. 1 zu entnehmen ist, besteht die Saegemaschine im wesentlichen aus einem Saegekopf 1, der nach oben und nach unten (in Pfeilrichtung f) entlang vertikal angeordneter, nicht dargestellter Fuehrungen, bewegbar ist.

An der Oberseite weist der Saegekopf 1 einen Flansch 2 zur Befestigung eines Antriebsmotores M (nicht dargstellt) auf, dessen Welle 3 mit einer Gewindeschnecke 4 fest verbunden ist, die mit einem Schneckenrad 5 in Verbindung steht, das mit der ersten Haelfte einer Kupplung, die gesamthaft mit 6 bezeichnet ist, verbunden ist. Das Kupplungstueck 6 besteht aus einer Scheibe 7, die segmentartige Vorspruenge 6a, 6b, 6c und 6d aufweist.

Die Welle 8, die das Scheckenrad 5 aufnimmt, das mit der Gewindespindel 4 in Wirkverbindung steht, traegt ferner ein weiteres huelsenartiges (10) Kupplungsteil 9, das ebenfalls segmentartige Vorspruenge 9a, 9b, 9c und 9d aufweist.

Die montierten Kupplungshaelften 6 und 9 sind koaxial zueinander angeordnet und derartig montiert, dass jeweils ein Segment 6a, 6b, 6c oder 6d sich mit einem entprechenden vorspringenden Segment 9a, 9b, 9c und 9d gegenuebersteht.

Zwischen den Segmenten 6a - 6d und den entprechenden gegenueberstehenden Vorspruengen 9a - 9d sind Federmittel vorgesehen, in vorteilhafter Weise Tellerfedern 11, die von Fuehrungsstiften 12 aufgenommen werden.

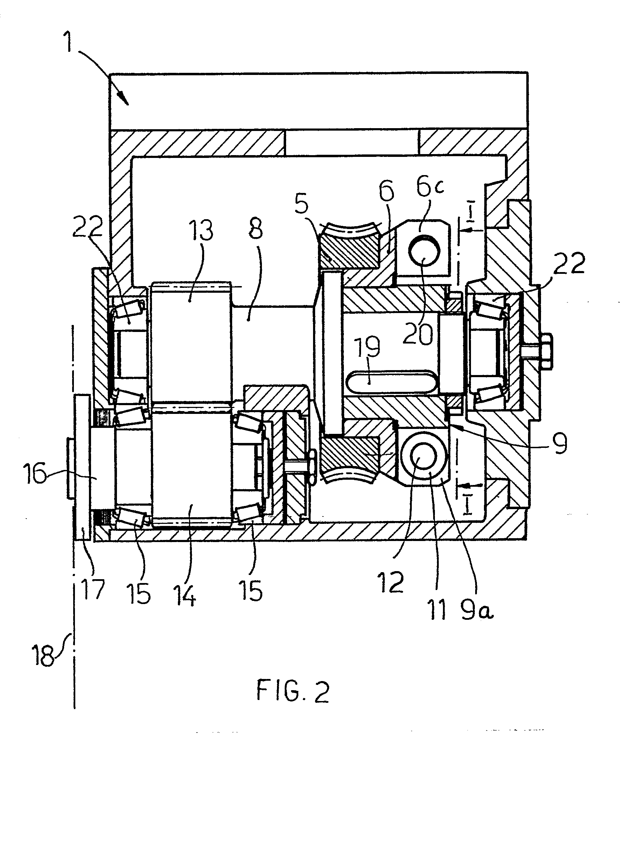

Aus Fig. 2 kann entnommen werden, dass die Welle 8 im Gehaeuse 1 unter Verwendung kraeftiger Waelzlager 22 angeordnet ist, und mit einem Zahnrad 13 verbunden ist, das mit einem weiteren Zahnrad 14 in Wirkverbindung steht, das ebenfalls unter Verwendung von Waelzlagern 15 im Gehaeuse 1 gelagert ist und mit einer Welle 16 verbunden ist, die einen Flansch 17 aufweist, der als Aufnahme fuer das Saegeblatt 18 dient.

Ferner kann man der Fig. 2 entnehmen, dass das Schneckenrad 5, das von der Gewindespindel 4 (Motor) angetrieben wird, fest mit der Kuppflungshaelfte 6 verbunden ist, das die segmentartigen Vorspruenge 6a - 6b aufweist, von denen in Fig. 2 nur das Segment 6c erkennbar ist.

Sowohl das Schneckenrad 5 als auch die Kupplungshaelfte 6 koennen sich gegenueber der Kupplungshaelfte 9 verlagern. Zu diesem Zwecke ist nur die huelsenartige Kupplungshaelfte 9 fest mit der Welle 8 ueber einen Federkeil 19 verbunden. Von der Kupplungshaelfte 9 stehen weitere segmentartige Vorspruenge ab, die in der Fig. 1 mit den Bezugszeichen 9a - 9d gekennzeichnet sind (in Fig. 2 ist nur das Bauteil 9d erkennbar).

Zur Aufnahme der Fuehrungsstifte 12 weisen die segmentartigen Vorspruenge 6a - 6d, sowie 9a - 9d Bohrungen 20 auf, die die Stifte 12 zur Lagerung der Federmittel 11, in vorteilhafter Weise Tellerfedern aufnehmen.

Die Funktionsweise der erfindungsgemaessen Vorrichtung wird nun genauer anhand der Figuren 1 und 2 beschrieben.

Wenn ueber den Motor (M) die Gewindespindel 4 angetrieben wird, ruft diese eine Drehbewegung des Zahnrades 5 in Richtung der Pfeiles g hervor. Somit, ueber das mit 6 bezeichnete Kupplungsteil, das mit dem Schneckenrad 5 drehfest verbunden ist, aber gegenueber dem huelsenfoermigen Kupplungsteil 9 verdrehbar gelagert ist, druecken die Segmente 6a - 6d die Federmittel gegen die segmentartigen Vorspruenge 9a - 9d des Bauteiles 9, das fest mit der Welle 8 wirkverbunden ist. Dadurch wird die Drehbewegung vom Antriebsmotor (M) an die Antriebswelle 16 uebertragen, die das Saegeblatt 18 aufnimmt und antreibt. Durch die Vorsehung der gegeneinander verdrehbaren Kupplungshaelften 6, 9 zwischen dem Antriebsmotor (M) und dem Kreissaegeblatt 18, sowie der Anordnung von Federmitteln 11 zwischen den Kupplungshaelften 6 und 9, wird eine elastische Kupplung gebildet und vermieden, dass das Saegeblatt 18 unter gewissen Schnittbedingungen in starke Schwingungen geraet. Somit wird eine unerwuenschte Geraeuschbelaestigung vermieden.

Ferner, durch Vorsehen einer elastischen Kupplung 6, 9, die zwischen dem Antriebsmotor (M) und dem Saegeblatt 18 angeordnet ist, wird ein Abbrechen einzelner Saegezaehne, sowie ein Bruch des gesamten Werkzeuges 18 in kritischer Schnittsituation vermieden, sollte einer oder mehrere Zaehne uebermaessig beansprucht werden. Dies tritt z.B. beim Saegen von komplexen Metallprofilen auf.

Es wurde festgestellt, dass in dem Fall, in welchem ein Zahn des Saegblattes 8 auf ein Teilstueck des Werkstueckes auftrifft (Kante, Steg, Rippe), das eine sehr grosse Zerspanungsleistung erfordert, das schlagartige Auftreffen des Saegezahnes 18 auf das Werkstueck sofort ausgeglichen wird, da die Gewindespindel 4, die die Drehbewegung auf das Zahnrad 5 uebertraegt im gleichen Moment eine Komprimierung der Federmittel 11 hervorruft, die durch die segmentartigen Vorspruengen 6a - 6d gegen die segmentartigen Vorspruenge 9a - 9d gedrueckt werden, dadurch wird dem Saegeblatt 18 die Moeglichkeit gegeben wird, fuer eine geringe Zeitspanne seine Drehgeschwindigkeit zu vermindern, wodurch gleichzeitig eine Verminderung der Schnittgewindikgkeit eintritt. Nach Ueberwinden des Hindernisses (Kante, Steg, Rippe), sobald die Zaehne der Kreissaegeblattes 18 erneut normalen Belastungszustaenden ausgesetzt sind, koennen sich die Federmittel 11 erneut entspannen, wodurch sowohl das Kupplungsteil 6 als auch das Kupplungsteil 9 in ihre Ursprungslage zurueckkehren.

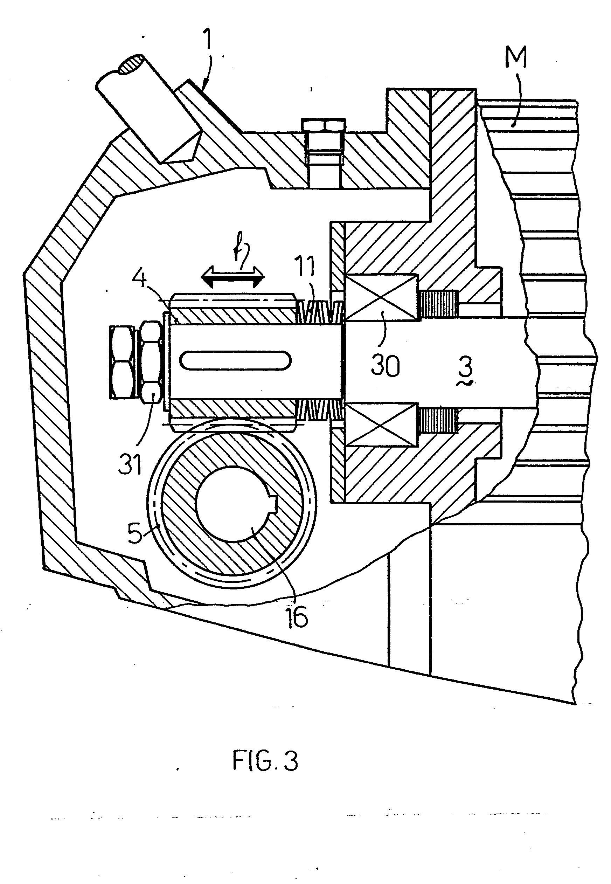

In Fig. 3 ist eine abgewandelte Ausfuehrungsform der Erfindung dargestellt. Mit dem Saegekopf 1 ist ein Antriebsmotor (M) wirkverbunden, dessen Antriebswelle 3 mit einer Gewindespindel 4 wirkverbunden ist, die verschiebbar auf der Welle 3 in Richtung des Pfeils f gelagert ist. Die Gewindespindel 4 steht mit einem Schneckenrad 5 in Wirkverbindung, das auf der Welle 16 befestigt ist, die zum Antrieb des in Fig. 3 nicht dargestellten Saegeblattes dient. Auch in diesem Fall ist auf der Welle 4 ein elastisch verformbares Federmittel vorgesehen, das in vorteilhafter Weise aus einem von Tellerfedern 11 gebildeten Federpaket besteht, das auf der einen Seite an der Gewindespindel 4 anliegt und sich auf der anderen Seite an einem Waelzlager 30 abstuetzt, das im

0154277

Maschinengehaeuse 1 untergebracht ist.

Die Federn 11 sind bestrebt, die Gewindespindel 4 gegen einen Anschlag zu druecken, der z.B. aus Muttern 31 besteht, die auf die Welle 3 aufgeschraubt sind.

Wenn die Welle 16 derartig belastet wird, dass ein Anhalten des Zahnrades 5 zu befuerchten ist, so wird die vom Motor (M) kommende Bewegung nicht weiter ueber die Welle 3 und die Gewindespindel 4 auf das Schneckenrad 5 uebertragen, sondern die Gewindespindel kann sich entgegen der Kraft des Federpaketes, geringfuegig in Richtung des Pfeiles f verschieben. Auch in diesem Falle wird die Schnittgeschwindigkeit des ueber die Welle 16 angetriebenen Werkzeuges kurzfristig verringert. Dadurch wird, wie bereits beschreiben, das Abbrechen einzelner Zaehne oder der Bruch des gesamten Saegblattes, sowie die Entwicklung unerwuenschter Saegegeraeusche aufgrund von Schwingungen des Saegeblattes vermieden.

Patentansprueche

1. Antriebsvorrichtung fuer eine mit einem sich drehenden Werkzeug ausgeruesteten Maschine, besonders fuer eine Saegemaschine, **dadurch gekennzeichnet**, dass zwischen dem Antriebsmotor (M) und der das Werkzeug (18) aufnehmenden Antriebswelle (16) ein Ausgleichsmittel (6; 6a,b,c,d, 9; 9a,b,c,d; 12; 11) vorgesehen ist, das proportional zu den auftretenden Belastungen, denen das Werkstueck ausgesetzt ist, elastisch verformbar ist.

2. Vorrichtung, nach Patentanspruch 1, **dadurch gekennzeichnet**, dass das Ausgleichsmittel (6; 6a,b,c,d; 9; 9a,b,c,d; 12; 11) aus einer erster Halbkupplung (6) besteht, die mit einem Antriebszahnrad (5) wirkverbunden ist, dass diese Kupplungshaelfte (6) aus einem scheibenfoermigen Bauteil besteht, von dem segmentartige Vorspruenge (6a, 6b, 6c, 6d) abstehen, die mit segmentartigen Vorspruengen (9a, 9b, 9c, 9d) einer zweiten Kupplungshaelfte (9) in Wirkverbindung treten, und dass zwischen den segmentartigen Vorspruengen der gegenseitig zueinander verschiebbaren Kupplungshaelften (6, 9) Federmittel (11) angeordnet sind.

3. Vorrichtung, nach Patentanspruch 1 und 2, **dadurch gekennzeichnet**, dass zwischen den beiden Kupplungshaelften (6, 9) Tellerfedern (11) angeordnet sind, die von Fuehrungsstiften (12) aufgenommen sind, deren Enden in den zueinander ausgerichteten, segmentartigen Vorspruengen (6a-d; 9a-d) gelagert sind.

4. Vorrichtung, nach Patentanspruch 1, dadurch gekennzeichnet, dass eine Kupplungshaelfte (9) fest mit der Antriebswelle (19, 8, 13) wirkverbunden ist, und die andere Kupplungshaelfte (6) mit dem Schneckenrad (5) wirkverbunden ist und frei verdrehbar auf der ersten Kupplungshaelfte (9) angeordnet ist.

5. Vorrichtung, nach Patentanspruch 1, dadurch gekennzeichnet, dass die Motorwelle (3) eine drehfest angeordnete Gewindespindel (4) aufweist, die auf der Antriebswelle (3) in Axialrichtung gegen die Wirkung eines Federmittels (11) verschiebbar angeordnet ist und, dass diese Gewindespindel (4) mit einem Schneckenrad (5) in Wirkverbindung steht, das fest mit der Welle (16) zur Aufnahme und zum Antrieb des Kreissaegeblattes (18) verbunden ist.

FIG. 1

FIG. 2

0154277

FIG. 3

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-C- 915 291 (HEIDENREICH)<br>* Anspruch 1 * | 1,2,4 | B 23 Q 11/00 |
| Y | | 3,5 | |
| Y | FR-A- 501 220 (MONTUPET)<br>* Seite 1, Zeilen 46-63 * | 3 | |
| Y | FR-A- 905 903 (SCHÜTOFF)<br>* Anspruch 1 * | 5 | |
| A | CH-A- 393 034 (DIXI) | 1 | |
| A | EP-A-0 061 086 (OERLIKON) | 1 | |
| A | SU-A- 603 501 (MIN.) | 1 | RECHERCHIERTE SACHGEBIETE (Int. Cl.4) |
| A | CH-A- 231 747 (SOCIETE) | 1 | B 23 Q<br>F 16 D |
| A | FR-A-2 219 341 (MITSUBISHI) | 4,5 | |

Der vorliegende Recherchenbericht wurde für alle Patentansprüche erstellt.

| Recherchenort<br>DEN HAAG | Abschlußdatum der Recherche<br>03-06-1985 | Prüfer<br>DE GUSSEM J.L. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82